# EUROPEAN PATENT APPLICATION

(11) **EP 2 377 812 A1**
(43) Date of publication of application: **19.10.2011**
(21) Application number: 09834692.7
(22) Date of filing: 03.12.2009
(51) Int. Cl.: C01B 7/04

(54) **CHLORINE MANUFACTURING METHOD**

(30) Priority: 22.12.2008 JP 2008326344
(71) Applicant: Sumitomo Chemical Company, Limited, Tokyo 104-8260 (JP)
(72) Inventor: KINOSHITA, Masahiro, Niihama-shi Ehime 792-0025 (JP); OMOTO, Norihito, Niihama-shi Ehime 792-0025 (JP)
(74) Representative: Duckworth, Timothy John
(86) International application number: PCT/JP2009/070332
(87) International publication number: WO 2010/073888

(57) **Abstract**

An object of the present invention is to provide a novel method for producing chlorine, by which it is possible to remove impurities contained with hydrogen chloride in a raw material gas and further to recover unreacted hydrogen chloride after an oxidation reaction efficiently in a method for producing chlorine by oxidizing hydrogen chloride. The method of the present invention for producing chlorine includes [1] an oxidation step of oxidizing hydrogen chloride in a raw material gas containing the hydrogen chloride and impurities with a gas containing oxygen, thereby obtaining a gas containing chlorine, water, unreacted hydrogen chloride, and unreacted oxygen; [2] an absorption step of bringing the gas containing chlorine, water, unreacted hydrogen chloride, and unreacted oxygen obtained in the oxidation step into contact with an absorbent liquid including water or aqueous hydrochloric acid or cooling the gas, thereby recovering unreacted hydrogen chloride in the form of a solution containing hydrogen chloride and water as main components and simultaneously obtaining a gas containing chlorine and unreacted oxygen as main components; and [3] a stripping step of distilling the solution obtained in the absorption step, thereby obtaining a gas containing hydrogen chloride as a main component, wherein the gas obtained in the stripping step, which contains hydrogen chloride as a main component and contains 5 to 50% by volume of water, is recovered and mixed with the raw material gas.

## Description

### TECHNICAL FIELD

The present invention relates to a method for producing chlorine.

### BACKGROUND ART

Chlorine is useful as a raw material of vinyl chloride and phosgene, and so on, and it is well known that chlorine is obtained through the oxidation of hydrogen chloride. For example, regarding a method including catalytically oxidizing hydrogen chloride with molecular oxygen using a catalyst to produce chlorine, a copper based catalyst, which is called a Deacon catalyst, is conventionally known to have a good catalytic activity, and many catalysts prepared by adding various compounds as third components to copper chloride and potassium chloride have been proposed. Besides such Deacon catalysts, methods using chromium oxides or other chromium compounds as a catalyst and methods using ruthenium oxides or other ruthenium compounds as a catalyst have also been proposed (International Publication No.04/037718 pamphlet (Patent Document 1)).

However, since the oxidation reaction of hydrogen chloride is an exothermic reaction accompanied by a heat generation of 14 kcal per mol of chlorine to be generated, it is important to inhibit rapid heat generation within an oxidation reactor.

In a method for producing chlorine with inhibition of such heat generation, it is difficult, in a reaction of pure hydrogen chloride with pure oxygen catalyzed by chromium oxide, to remove a hot spot in a fixed bed reaction system, and it is known that the adoption of a fluidized bed reactor is needed in an actual apparatus (see, for example, Tadamitsu KIYOURA and other two persons, Catalysts, 1991, volume 33, No. 1, p. 15 (Non-Patent Document 1)).

In a method for producing chlorine, a gas containing chlorine obtained by oxidizing hydrogen chloride is brought into contact with water or aqueous hydrochloric acid, a gas containing chlorine and oxygen as main components is obtained by removing unreacted hydrogen chloride, and the gas is subjected to drying and then purification. In that case, the unreacted hydrogen chloride can be used again as a raw material for the production of chlorine. In this case, the unreacted hydrogen chloride is recovered in the form of a gas containing hydrogen chloride and water as main components (or an aqueous hydrogen chloride solution), and it is then supplied to a reactor for oxidation (Japanese Patent Laying-Open No. 2000-34105 (Patent Documents 2), Japanese Patent Laying-Open No. 2001-19405 (Patent Documents 3), and so on).

Generally, since an aqueous hydrogen chloride solution forms an azeotrope, it is difficult to separate it into hydrogen chloride and water, which are its constituents, and recover them by only simple distillation. As a method of separating and recovering hydrogen chloride and water from such an aqueous hydrogen chloride solution, a method including adding a strong electrolyte such as sulfuric acid or calcium chloride to an aqueous hydrogen chloride solution as a third component, and distilling the solution while changing an azeotropic state is known. As a concrete procedure, a solution is distilled as a first stage in a state where the activity of water in the solution is lowered by the addition of a strong electrolyte, thereby stripping a gas containing hydrogen chloride as a main component and recovering it. Then, as a second stage, the aqueous strong electrolyte solution resulting from the first step is distilled, so that water is distilled.

The aqueous strong electrolyte solution condensed in the second stage can be reused as an additive in the first stage.

However, this method is problematic in that a third component must be added and that an expensive material is needed as an apparatus material. For example, in the case of adding sulfuric acid as a third component, the concentration of the sulfuric acid to be added in the first stage is preferably adjusted to at least 80% by weight for obtaining a sufficient effect to change an azeotropic state and preventing the flow rate of sulfuric acid condensed in the second stage from becoming excessively large before returning it to the first stage. However, if sulfuric acid with such a concentration is added, since the distillation in the first stage will be done in a state where hydrogen chloride, water, and sulfuric acid are present together and the boiling point of the solution will rise, it is difficult to use an inexpensive material such as resin-impregnated carbon, which is often used for distillation of an aqueous hydrogen chloride solution.

Although dehydration in the second step is generally carried out under reduced pressure because the operating temperature becomes a high temperature of 200°C or more under the atmospheric pressure, on the other hand, there is a limit in lowering the operating temperature in the dehydration step because it becomes difficult to condensate evaporated water if the operating pressure is lowered excessively. Thus, it is usually required to use an expensive corrosion-resistant material, such as tantalum, for an apparatus for dehydration. In the case of adding calcium chloride as a third component, attachment of scale due to deposition of a solid material may occur in the second step dehydration.

### PRIOR ART DOCUMENTS

### PATENT DOCUMENTS

Patent Document 1: International Publication No.04/037718 pamphlet
Patent Document 2: Japanese Patent Laying-Open No. 2000-34105
Patent Document 3: Japanese Patent Laying-Open No. 2001-19405

### Non-Patent Documents

Non-Patent Document 1: Tadamitsu KIYOURA and other two persons, "Recovery of Chlorine from Hydrogen Chloride", Catalysts, Catalysis Society of Japan, vol. 33, No. 1, 1991, p. 15

### SUMMARY OF THE INVENTION

### PROBLEMS TO BE SOLVED BY THE INVENTION

In order to maintain the amount of moisture contained in a raw material gas within a desired range so that the heat generation in an oxidation reactor may be inhibited, it is necessary, for example, to provide separately a facility for maintaining the amount of moisture in the raw material gas. In the case of providing such a separate facility in this manner, the complication of apparatus configuration and the increase in complexity on apparatus operation for adjusting the amount of moisture are sometimes unavoidable.

The present invention has been made in light of the above-mentioned problems, and an object thereof is to provide a method for producing chlorine, by which it is possible to efficiently recover unreacted hydrogen chloride after an oxidation reaction and it is also possible to efficiently adjust the amount of moisture in a raw material necessary for operating an oxidation reactor stably in a method for producing chlorine by oxidizing hydrogen chloride.

### MEANS FOR SOLVING THE PROBLEMS

The method of the present invention for producing chlorine includes [1] an oxidation step of oxidizing hydrogen chloride in a raw material gas containing hydrogen chloride and impurities with a gas containing oxygen, thereby obtaining a gas containing chlorine, water, unreacted hydrogen chloride, and unreacted oxygen; [2] an absorption step of bringing the gas containing chlorine, water, unreacted hydrogen chloride, and unreacted oxygen obtained in the oxidation step into contact with an absorbent liquid including water or aqueous hydrochloric acid or cooling the gas, thereby recovering unreacted hydrogen chloride in the form of a solution containing hydrogen chloride and water as main components and simultaneously obtaining a gas containing chlorine and unreacted oxygen as main components; and [3] a stripping step of distilling the solution obtained in the absorption step, thereby obtaining a gas containing hydrogen chloride as a main component, wherein the gas obtained in the stripping step, which contains hydrogen chloride as a main component and contains 5 to 50% by volume of water is recovered and mixed with the raw material gas.

### EFFECTS OF THE INVENTION

In accordance with the method of the present invention for producing chlorine, separation into hydrogen chloride and water can be performed efficiently without adding a third component to the hydrogen chloride unreacted in the oxidation reaction recovered in the above-mentioned absorption step. Chlorine can be produced in a high yield by subjecting the obtained hydrogen chloride again to the oxidation step. Moreover, moisture can be supplied into the oxidation step efficiently without separately providing any apparatus for supplying moisture by allowing the gas containing hydrogen chloride obtained by separation to be accompanied by moisture in an amount necessary for stably operating the oxidation reactor.

The method of the present invention for producing chlorine includes an absorption step and a stripping step, so that impurities contained in a raw material gas can be removed efficiently and thus a stable activity of a catalyst to be used in an oxidation step can be maintained and, as a result, chlorine can be obtained stably in a high yield. Moreover, it includes an absorption step and a stripping step, so that complicated separation of generated chlorine, unreacted oxygen, and a wide variety of impurities in a raw material gas can be simplified or omitted and thus chlorine can be produced very easily in terms of a catalyst cost, a facility cost, and an operating cost.

In accordance with the method of the present invention for producing chlorine, a specific amount of water is made to be contained in a gas to be used as a raw material gas, and thus the temperature distribution in an oxidation reactor can be smoothened, so that the oxidation reactor can be used efficiently and simultaneously, a production method particularly superior in terms of a catalyst cost, and the stability and the ease of operation can be provided by maintaining a stable activity of a catalyst.

### BRIEF DESCRIPTION OF THE DRAWINGS

Fig. 1 is a flow chart schematically showing a preferred example of the method of the present invention for producing chlorine.
Fig. 2 is a diagram showing the relationship between the tower top temperature and top pressure in a stripping step and the moisture concentration in a recovered hydrogen chloride gas.

### MODES FOR CARRYING OUT THE INVENTION

The present invention will be described more in detail below.

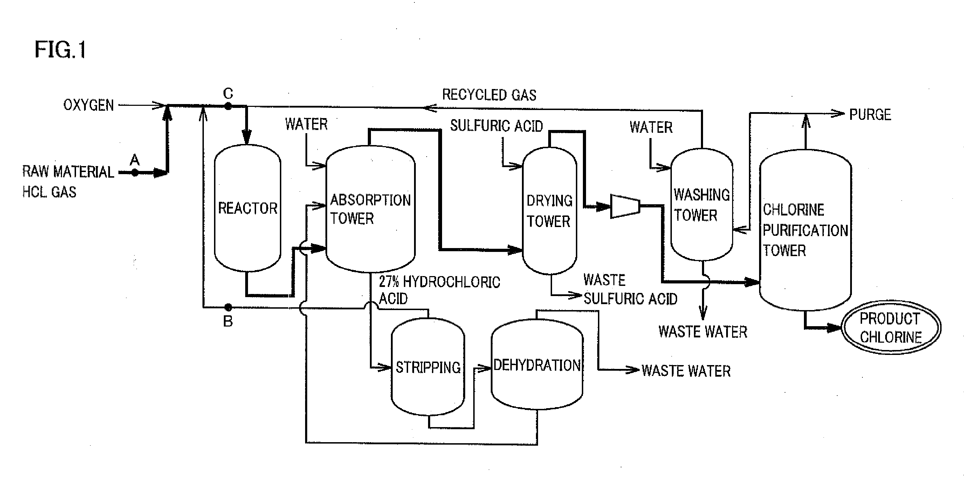

Fig. 1 is a flow chart schematically showing a preferred example of the method of the present invention for producing chlorine. The outline of the present invention is a method of oxidizing hydrogen chloride in a raw material gas containing hydrogen chloride and impurities with a gas containing oxygen, thereby producing chlorine.

As the raw material gas in the present invention can be used any gas containing hydrogen chloride generated in, for example, a thermal decomposition reaction or a combustion reaction of a chlorine compound, a phosgenation reaction or a chlorination reaction of an organic compound, and combustion in a combustion furnace.

It is preferable for the raw material gas in the present invention that the concentration of the hydrogen chloride in the raw material gas be 10% by volume or more, and a raw material gas having preferably 50% by volume or more, and more preferably 80% by volume or more is used. When the concentration of hydrogen chloride in the raw material gas is lower than 10% by volume, the amount of the hydrogen chloride to be removed together with impurities in the below-described absorption step becomes large, so that it tends to become difficult to control the loss of hydrogen chloride to a small amount. When the concentration of the hydrogen chloride in the raw material gas is lower than 10% by volume, there is a fear that the concentration of the oxygen in a gas containing unreacted oxygen as a main component obtained in a purification step described below becomes low, so that the amount of the gas to be supplied to a reaction step in a circulation step described below must be reduced.

Examples of the impurities contained with hydrogen chloride in the raw material gas include chlorinated aromatic hydrocarbons, such as orthodichlorobenzene and monochlorobenzene, aromatic hydrocarbons, such as toluene and benzene, chlorinated hydrocarbons, such as methyl chloride and ethyl chloride, hydrocarbons, such as methane, acetylene, ethylene, and propylene, and inorganic gases, such as nitrogen, argon, carbon dioxide, carbon monoxide, phosgene, hydrogen, carbonyl sulfide, hydrogen sulfide, and sulfur dioxide.

The method of the present invention for producing chlorine has a feature of including at least [1] an oxidation step, [2] an absorption step, and [3] a stripping steps. Each step in the present invention will be described in detail below.

### [1] Oxidation step

The oxidation step in the present invention is a step of oxidizing hydrogen chloride in a raw material gas with a gas containing oxygen, thereby obtaining a gas containing chlorine, water, unreacted hydrogen chloride, and unreacted oxygen. Herein, the raw material gas to be subjected to the oxidation step is prepared by mixing with a gas obtained in a stripping step described below, which contains hydrogen chloride as a main component and has a specific moisture content. Water used in the present invention is a substance represented by a chemical formula H₂O, and it includes any one in any phase state, such as steam.

While a gas containing oxygen is used for the oxidation of hydrogen chloride in the oxidation step, oxygen or air is used as the gas containing oxygen. Regarding the concentration of oxygen in the gas containing oxygen, a gas having a concentration of preferably 80% by volume or more, more preferably 90% by volume or more is used. When the concentration of the oxygen is lower than 80% by volume, there is a fear that the concentration of the oxygen in a gas containing unreacted oxygen as a main component obtained in a purification step described below becomes low, so that the amount of the gas to be subjected to the oxidation step in a circulation step described below must be reduced. The gas containing oxygen in an oxygen concentration of 80% by volume or more can be obtained by a usual industrial method such as an air pressure swing method or a supercold separation method. Examples of the component other than hydrogen chloride in the gas containing oxygen include nitrogen (N₂) and argon (Ar).

Although the theoretical molar amount of oxygen to 1 mol of hydrogen chloride in the oxidation of hydrogen chloride is 0.25 mol, it is known that a reaction advances more efficiently when oxygen is added to hydrogen chloride in excess of the stoichiometric ratio, and it is preferred to supply oxygen in a theoretical amount or more, and it is more preferable that the amount of oxygen to 1 mol of hydrogen chloride be 0.25 to 2 mol. If the amount of oxygen is excessively small, the conversion ratio of hydrogen chloride may become low, whereas if the amount of oxygen is excessively large, it may become difficult to separate generated chlorine from unreacted oxygen.

As a catalyst of the oxidation reaction in the oxidation step, conventional catalysts known as catalysts for oxidizing hydrogen chloride to produce chlorine can be used. Examples of such catalysts include catalysts resulting from the addition of various compounds as third components to copper chloride and potassium chloride, catalysts containing chromium oxide as a main component, and catalysts containing a ruthenium compound, such as metal ruthenium or ruthenium oxide as a main component. These catalysts may be used alone or in combination of a plurality of them.

Among the above-mentioned catalysts, it is preferred in the present invention to use a catalyst in which a ruthenium compound such as metal ruthenium or ruthenium oxide has been carried on a metal oxide carrier. Influence of a catalyst poison can be reduced by using a catalyst in which a ruthenium compound such as metal ruthenium or ruthenium oxide has been carried on a metal oxide carrier while filling it in a fixed bed reactor. The use of a ruthenium compound such as metal ruthenium or ruthenium oxide avoids a problem of clogging of a pipe or the like caused by volatilization or scattering of a catalyst component, and eliminates the necessity of a step of treating the volatilized or scattered catalyst component. Further chlorine can be produced in equilibrium at an advantageous temperature, and thus it is possible to simplify a step of recovering unreacted hydrogen chloride and water, a step of separating chlorine from unreacted oxygen, and a step of supplying unreacted oxygen to a reaction step, thereby saving a facility cost and an operation cost.

The content of the ruthenium compound such as metal ruthenium or ruthenium oxide in the catalyst is preferably from 0.1 to 20% by weight. This is because the conversion rate of hydrogen chloride tends to become low due to low catalytic activity if the content of the ruthenium compound such as metal ruthenium or ruthenium oxide in the catalyst is less than 0.1% by weight and also because the price of a catalyst tends to become high if the content of the ruthenium compound such as metal ruthenium or ruthenium oxide in the catalyst exceeds 20% by weight.

The particle diameter of the ruthenium compound such as metal ruthenium or ruthenium oxide is not particularly limited, but is preferably within a range of 1 nm to 10 nm. The above-mentioned particle diameter refers to, for example, the value measured by observation by means of an electron microscope.

Examples of the metal oxide carrier in the catalyst include carriers formed of metal oxides, such as γ-alumina, α-alumina, rutile type titania, anatase type titania, silica, and zirconia. Among them, the use of metal oxide carriers formed of γ-alumina, α-alumina, rutile type titania, and anatase type titania is preferred because their reaction activity is high and hardly lowers.

Specific examples of catalysts particularly suitable for the oxidation step in the present invention include, but are not limited to, a supported ruthenium oxide catalyst or a ruthenium oxide composite oxide type catalyst having a content of ruthenium oxide of from 0.1% by weight to 20% by weight and a mean particle diameter of ruthenium oxide of from 1.0 nm to 10.0 nm, which is disclosed in Japanese Patent Laying-Open No. 10-338502.

A fixed bed gas phase circulating system using a fixed bed reactor is applied as the reaction system in the oxidation step. As the fixed bed reactor in the present invention, a reactor in which temperature control of at least two reaction zones among all reaction zones is performed by a heat exchange system by, for example, the method disclosed in Japanese Patent Laying-Open No. 2000-272907 may be used. In such a reactor having a reaction zone divided into two zones, if two reaction zones of the first stage are prepared and the reactor is used while switching the first stage alternately before the second and higher stages are poisoned, the problem can be avoided practically. However, the preparation of two expensive reactors is disadvantaged in terms of cost.

One example of the fixed bed type reactor includes one or two or more fixed bed type reaction tubes linked in series having a jacket part outside the reaction tubes. The temperature in the reaction tube is controlled by a heat medium of the jacket part. The heat of reaction generated in the reaction can be recovered by generating steam through the heat medium. Examples of the heat medium include a molten salt, an organic heat medium, and molten metal, and the molten salt is preferred in terms of thermal stability, ease af handling, and so on. Examples of the composition of the molten salt include a mixture of 50% by weight of potassium nitrate and 50% by weight of sodium nitrite and a mixture of 53% by weight of potassium nitrate, 40% by weight of sodium nitrite, and 7% by weight of sodium nitrate. Examples of the material to be used for the reaction tube include metal, glass, and ceramics. Examples of the metallic material include Ni, SUS316L, SUS310, SUS304, Hastelloy B, Hastelloy C, and Inconel. Among these, Ni is preferred and Ni having a carbon content of 0.02% by weight or less is particularly preferred.

While the reaction temperature of the oxidation reaction in the oxidation step is not particularly limited if it is within a temperature range usually chosen in an oxidation reaction of hydrogen chloride, it is preferably within the range of 100°C to 500°C, and more preferably within the range of 200°C to 400°C. This is because if the reaction temperature is lower than 100°C, a required rate of reaction can not be obtained, so that there is a fear that the degree of reaction may become very low, and if the reaction temperature exceeds 500°C, there is a tendency that the activity of a catalyst falls due to sintering and volatilization of the catalyst. The reaction pressure of the oxidation reaction is preferably within the range of 0.1 MPa to 5 MPa so that the rate of reaction may be moderate and the facility cost may not become excessively high.

After the oxidation step, unreacted oxygen can be recycled to a reaction after being separated from chlorine.

### [2] Absorption step

The absorption step in the present invention is a step of bringing the gas containing chlorine, water, unreacted hydrogen chloride, and unreacted oxygen obtained in the above-mentioned oxidation step into contact with an absorbent liquid including water or aqueous hydrochloric acid or cooling the gas, thereby recovering unreacted hydrogen chloride in the form of a solution containing hydrogen chloride and water as main components and simultaneously obtaining a gas containing chlorine and unreacted oxygen as main components. The gas obtained in the oxidation step contains carbon dioxide, nitrogen, argon, and so on in addition to the above-mentioned gas. In the absorption step, the gas obtained in the oxidation step is brought into contact with water or aqueous hydrochloric acid and, in some cases, is cooled, so that unreacted hydrogen chloride is made to be absorbed in water or hydrochloric acid to form a solution containing hydrogen chloride and water as main components and thus a gas containing chlorine and oxygen as main components is separated. The solution containing hydrogen chloride and water as main components obtained in the absorption step is subject to the stripping step described below.

In the absorption step, the temperature at which the gas containing chlorine is brought into contact with water or hydrochloric acid is not particularly limited and is preferably from 0°C to 100°C from the viewpoint of failing to impair the absorptivity to water of hydrogen chloride and avoiding dissolution of gas components in an aqueous hydrochloric acid solution as much as possible. The pressure applied in the above-mentioned contact is 0.05 MPa to 1.0 MPa from the viewpoint of failing to impair the absorptivity to water of hydrogen chloride and avoiding dissolution of gas components in an aqueous hydrochloric acid solution as much as possible. In the absorption step, it is preferred, for preventing chlorine hydrates from precipitating, to adopt a method in which in a countercurrent gas-liquid contact apparatus having two or more stages like that disclosed in Japanese Patent Laying-Open No. 2003-261306, a gas is brought into contact with falling water supplied from the top stage of the apparatus, thereby being cooled, and when hydrogen chloride in this gas is dissolved in the falling water and is discharged in the form of hydrochloric acid from the tower bottom and chlorine gas obtained by removing hydrogen chloride is discharged from the tower top, part of the falling water is discharged from the bottom part of the middle stage under such a condition that the pressure in the apparatus is 0.1 MPa to 1 MPa and then this discharged water is supplied to the apparatus from the upper part of the middle stage through a pipe.

### [3] Stripping step

The stripping step in the present invention is a step of distilling the solution containing hydrogen chloride and water obtained in the absorption step, thereby obtaining a gas containing hydrogen chloride as a main component. The solution containing hydrogen chloride and water stripped in the stripping step usually contains hydrogen chloride more than the azeotropic composition of hydrogen chloride and water under the pressure in the stripping step. The composition of such a solution containing hydrogen chloride and water usually contains 25 to 40% by weight of hydrogen chloride and 60 to 75% by weight of water.

When the stripping step is followed by a dehydration step described below, it is preferable that pressure higher than the pressure P_{de} in the dehydration step be selected as the pressure in the stripping step (the pressure in the top of the stripping tower, P_{dif}), and it is usually 0.03 to 1.0 MPa.

The temperature in the stripping step (the temperature in the bottom of the stripping tower) depends on the above-mentioned pressure and the composition of the solution containing hydrogen chloride and water to be subjected to the stripping of the stripping step, is usually 100 to 180°C. Steam is preferably used as the heat source in the stripping tower.

Examples of the structure of the stripping tower to be used in the stripping step include a packed tower and a shelf plate tower. Moreover, the stripping tower may be provided with incidental devices, such as a reboiler, and in this case, materials having corrosion-resistance to a solution containing hydrogen chloride and water under operating conditions (for example, resin-impregnated carbon, fluorinated ethylene-based resin, metal having an inside lined or coated with fluorinated ethylene-based resin, tantalum or tantalum alloy, and metal having an inside lined or coated with tantalum or tantalum alloy) are used preferably as the apparatus material of the stripping tower and the incidental devices.

In the stripping step, a gas containing high-concentration hydrogen chloride as a main component is obtained from the top of the stripping tower. The gas containing hydrogen chloride as a main component obtained in this way is mixed with a raw material and then is subject to the oxidation step as mentioned above.

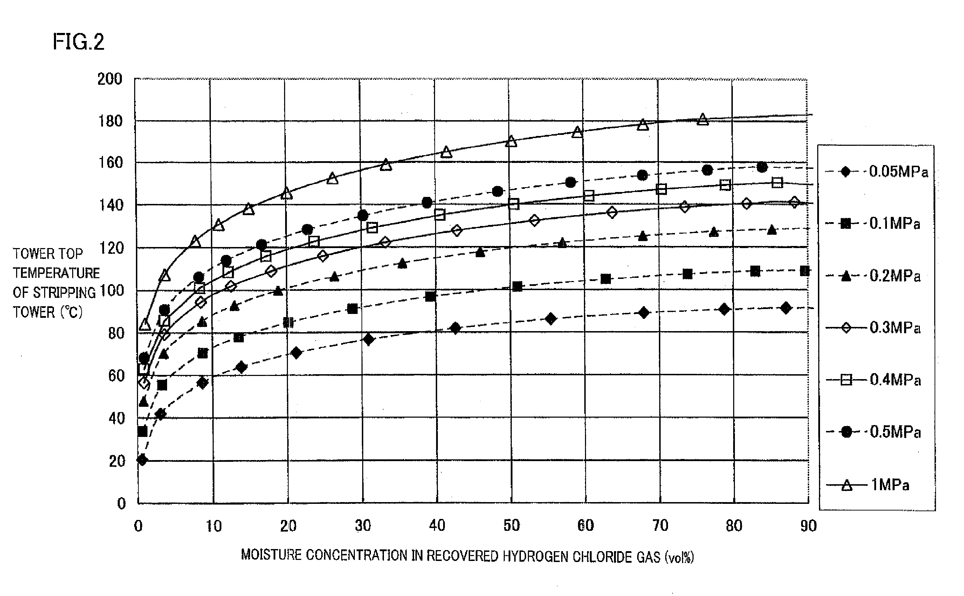

In the present invention, the degradation of, for example, the catalyst to be used for the oxidation step can be inhibited by recovering the gas that contains hydrogen chloride as a main component obtained from the tower top and contains 5% by volume to 50% by volume of water and mixing it with a raw material gas and, as a result, it becomes possible to produce chlorine more efficiently. The concentration of the moisture contained in the gas containing hydrogen chloride as a main component obtained from the tower top (hereinafter sometimes referred to as recovered hydrogen chloride gas) can be adjusted to be a desired moisture concentration depending upon stripping conditions by producing in advance a calibration curve about the relationship between the tower top temperature and tower top pressure in the stripping step and the moisture concentration in the recovered hydrogen chloride gas as shown in Fig. 2. Since the operating pressure varies depending upon the scale of the stripping tower, the amount of a raw material gas to be supplied and so on, the moisture concentration can be adjusted by monitoring the tower top temperature and the tower top pressure and determining the relationship between the tower top temperature and tower top pressure and the moisture concentration in the recovered hydrogen chloride gas as shown in Fig. 2. Although the adjustment of the moisture concentration can be performed by adjusting the stripping conditions in the stripping step, a step of adjusting the moisture concentration in combination with the above-mentioned stripping step by, for example, a distillation operation provided with a distillation tower or the like at a position indicated by B in Fig. 1 may be additionally included besides the stripping step. It is also possible to reduce the amount of the moisture contained in the gas by the addition of a dephlegmating operation that includes cooling the gas containing hydrogen chloride as a main component obtained in the stripping step and returning a condensed aqueous hydrogen chloride solution to the stripping tower.

The gas containing hydrogen chloride as a main component, which has a specific moisture concentration and is mixed with the above-mentioned raw material gas, is preferably adjusted so that the volume ratio B/A may satisfy from 0.05 to 2 where the amount of the hydrogen chloride contained in the raw material gas is represented by A and the amount of the hydrogen chloride contained in the recovered hydrogen chloride gas is represented by B, and it is more preferred that the volume ratio B/A satisfy from 0.1 to 1. By mixing a recovered hydrogen chloride gas having a specific moisture concentration in such a volume ratio with a raw material gas, it is possible to prevent the degradation of a catalyst to be used for the oxidation step caused by moisture and maintain the activity of the catalyst.

In the present invention, the concentration of the moisture contained in the whole raw material gas to be subjected to the oxidation step is preferably adjusted to 0% by volume to 10% by volume and is more preferably adjusted to 0% by volume to 5% by volume. Although the amount of the moisture of such a gas to be subjected to the oxidation step can be adjusted by the tower top temperature and the tower top pressure in the stripping step as described above, the amount of the moisture may be adjusted additionally at a position indicated by A in Fig. 1, and similarly, it may be adjusted additionally at a position indicated by C in Fig. 1.

In the stripping step, the aqueous hydrochloric acid recovered from the bottom of the stripping tower can be partially or wholly recycled as an absorbent liquid of an absorption step after being subjected to a dehydration step described below.

The method of the present invention for producing chlorine includes the aforementioned steps [1] to [3], thereby being able to efficiently recover unreacted hydrogen chloride remaining after an oxidation reaction and to efficiently supply necessary moisture to a raw material gas.

That is, because of the inclusion of the absorption step and the stripping step, impurities contained in a raw material gas can be removed efficiently, thereby a stable activity of a catalyst to be used in the oxidation step can be maintained and, as a result, chlorine can be obtained stably in a high yield. Moreover, because of the inclusion of the absorption step and the stripping step, complicated separation of generated chlorine, unreacted oxygen, and a wide variety of impurities in a raw material gas can be simplified or omitted, and thus chlorine can be produced very easily in terms of a catalyst cost, a facility cost, and an operation cost.

The method of the present invention for producing chlorine can inhibit the degradation of, for example, a catalyst to be used for the oxidation step by recovering the gas obtained in the stripping step containing hydrogen chloride as a main component and containing a specific amount of water, and mixing it with a raw material gas, so that it becomes possible to produce chlorine more efficiently.

### [4] Dehydration step

In the method of the present invention for producing chlorine, it is preferable to subject partially or wholly an aqueous hydrogen chloride solution after separating the gas containing hydrogen chloride as a main component in the stripping step to [4] the dehydration step, separate it into hydrochloric acid and waste water, and recycle the recovered hydrochloric acid to the absorption step.

In the dehydration step, a stripping tower (distillation tower) different from the stripping tower used in the stripping step is used and a condition satisfying P_{dif} > P_{de} is produced where the pressure in the stripping step (the pressure at the top of the stripping tower) is represented by P_{dif} and the pressure in the dehydration step (the pressure at the top of the distillation tower) is represented by P_{de}. Under such pressure lower than the pressure in the stripping step, the aqueous hydrogen chloride solution at the bottom of the stripping tower obtained in the stripping step is made to strip (distill). The aqueous hydrogen chloride solution contains water more than an azeotropic composition of hydrogen chloride and water under the pressure in the dehydration step. In this dehydration step, the above-mentioned aqueous hydrogen chloride solution is distilled (stripped), so that water is recovered from the top of the distillation tower and hydrochloric acid separated from water is recovered from the bottom of the distillation tower.

The pressure P_{de} in the dehydration step may be set to be lower than the pressure P_{dif} in the above-mentioned stripping step and is not particularly limited, but is preferably from 0.005 MPa to 0.05 MPa. The temperature in the dehydration step is determined appropriately depending upon the above-mentioned pressure and the composition of an aqueous hydrogen chloride solution to be subjected to stripping, but is usually from 50°C to 90°C. Since this temperature is lower than the temperature of the dehydration step in the case of adding a strong electrolyte, such as sulfuric acid, as a third component, the heat source to be used can be selected from a wider range, and the apparatus material of a device also can be selected from a wide range and relatively inexpensive materials, such as glass lining and glass fiber-containing resin, can be used. Steam is preferably used as the heat source.

The system of a stripping tower to be used in the dehydration step is not particularly restricted and examples thereof include a packed tower and a shelf plate tower, and preferred is a system in which a condensation section is provided above a raw material feeding stage and the whole portion of a gas fed from the tower top is condensed and the condensed liquid is partially returned to the tower top so that water can be condensed efficiently in the tower top side.

The composition of the hydrogen chloride solution to be subjected to the dehydration step can be adjusted, depending upon the stripping conditions in the stripping step, to a composition being richer in water than the azeotropic composition of hydrogen chloride and water under the pressure P_{de} in the dehydration step, and it is usually adjusted to 15 to 21% by weight of hydrogen chloride and 79 to 85% by weight of water. Generally, the relative volatility of water to hydrogen chloride is large in the side where the concentration of water is higher than the azeotropic composition of hydrogen chloride and water, and therefore water of a high concentration can be easily separated and recovered from the tower top.

Moreover, it is permissible to adopt an aspect including a supply step of supplying partially or wholly an aqueous hydrogen chloride solution at the bottom of the distillation tower after dehydration in the dehydration step as described above as the absorbent liquid of the absorption step. Because of the inclusion of such a supply step, it becomes possible to produce chlorine efficiently.

When the dehydration step is included in the method of the present invention for producing chlorine, the solution that has been obtained in the absorption step and is to be subjected to the stripping step is generally lower in solution temperature than the hydrogen chloride solution at the bottom part of the distillation tower in the dehydration step, so that it is possible to provide a mechanism of heat recovery by heat exchange utilizing such a temperature difference. When the mechanism of heat recovery is provided, the operation cost in a production process can be reduced.

The method of the present invention for producing chlorine may, of course, include any known appropriate step commonly included in a method for producing chlorine, such as [5] a drying step, [6] a purification step, [7] a circulation step, and [8] an abatement step, in addition to the aforementioned steps [1] to [3] and [4] the dehydration step. Each of these steps is described below.

### [5] Drying step

The drying step is a step of removing the moisture contained in the gas containing chlorine and unreacted oxygen as main components obtained in the absorption step, thereby obtaining a dry gas. The amount of the moisture in the gas after the drying step is 0.5 mg/L or less and preferably is 0.1 mg/L or less. While examples of the compound that removes the moisture in the gas include sulfuric acid, calcium chloride, magnesium perchlorate, and zeolite, sulfuric acid is preferred particularly because its discharge after its use is easy. Examples of the method of removing the moisture contained in the gas include a method of bringing the gas containing chlorine and unreacted oxygen as main components obtained in the absorption step into contact with sulfuric acid.

The concentration of the sulfuric acid to be used in the drying step is preferably 90% by weight or more. If the sulfuric acid concentration is lower than 90% by weight, the moisture in the gas may not be removed sufficiently. The contact is performed at a temperature of from 0°C to 80°C and under a pressure of from 0.05 MPa to 1 MPa. When using sulfuric acid as a drying agent, it is preferred to remove sulfuric acid mist just after the drying step. For example, there can be adopted a Brink eliminator or the method described in Japanese Patent Laying-Open No. 2003-181235 that includes bringing a dry gas containing a sulfuric acid mist into contact with a base material capable of reacting with sulfuric acid to form a salt, thereby forming a salt, and then collecting the generated sulfate with a filter.

### [6] Purification step

The purification step is a step of obtaining chlorine by separating the dried gas obtained in the aforementioned drying step into a liquid or gas containing chlorine as a main component and a gas containing unreacted oxygen as a main component. Examples of the method of separation into a liquid or gas containing chlorine as a main component, and a gas containing unreacted oxygen as a main component, include a method of compressing and/or cooling, and/or known methods (Japanese Patent Laying-Open No. 3-262514, National Patent Publication No. 11-500954). For example, a liquid containing chlorine as a main component is separated from a gas containing unreacted oxygen as a main component by compressing and/or cooling the gas obtained in the drying step. Liquefaction of chlorine is carried out within a range defined by pressure and temperature where chlorine can exist in a liquid state. Although if the temperature is lowered more and more within the range, the compression pressure becomes lower and it is possible to reduce the compression power, the compression pressure and the cooling temperature are determined in consideration of the optimum economic condition within this range industrially in view of problems with facilities and so on. In a usual operation, the liquefaction of chlorine is carried out under a compression pressure of 0.5 MPa to 5 MPa at a cooling temperature of -70°C to 40°C.

The resulting liquid containing chlorine as a main component can be used, as it is or after being vaporized partially or wholly, as a raw material of vinyl chloride, phosgene, and so on. In the case of using the liquid after vaporizing it partially or wholly, it is possible to obtain part of the heat necessary for the vaporization simultaneously reduce a cooling load due to an external cooling medium necessary for the liquefication of chlorine in the gas obtained in the drying step by performing heat exchange of the gas obtained in the drying step. Similarly, it can be used for precooling of liquid chlorofluorocarbons or cooling the reflux liquid of a chlorine distilling tower and so on.

### [7] Circulation step

The circulation step is a step of supplying the gas containing unreacted oxygen as a main component obtained in the above-described purification step partially or wholly to the oxidation step. In the production method of the present invention, when circulating a gas containing unreacted oxygen as a main component to a reaction step, sulfuric acid mist is removed by, for example, washing the gas with water. It is preferred to adjust the sulfur component concentration at the inlet of the reactor to 1000 volppb or less by such an operation.

### [8] Abatement step

The abatement step is a step of discharging the gas containing unreacted oxygen as a main component obtained in the above-described purification step or the gas not having been supplied to the oxidation step in the above-described circulation step out of the system after removing chlorine contained in the gas. Examples of the method of abating chlorine include a method of performing abatement by bringing a gas into contact with an aqueous solution of an alkali metal hydroxide, or an aqueous solution of alkali metal thiosulfate, or an aqueous solution in which an alkali metal sulfite and alkali metal carbonate have been dissolved, or an aqueous solution in which an alkali metal sulfite and alkali metal carbonate have been dissolved, or an aqueous solution in which an alkali metal hydroxide and alkali metal sulfite have been dissolved, and known methods of separating and recovering chlorine in a gas (Japanese Patent Laying-Open No. 3-262514, Japanese Patent Laying-Open No. 10-25102, and National Patent Publication No. 11-500954).

The method of the present invention for producing chlorine is not accompanied by a problem of clogging of a pipe or the like caused by volatilization or scattering of a catalyst component and does not need a treating step due to preferred inclusion of all of the above-described steps, and can produce chlorine in equilibrium at an advantageous temperature by the use of a highly active catalyst. It therefore can simplify a step of recovering unreacted hydrogen chloride and water, a step of separating chlorine from unreacted oxygen, and a step of supplying unreacted oxygen to an oxidation reaction and thus can realize a method for producing chlorine excellent particularly in terms of a facility cost and an operation cost.

Although the embodiments of the present invention have been described above, appropriate combinations of the configurations of the embodiments provided above have also been intended from the beginning.

It should be understood that the embodiments disclosed herein are non-limiting and only illustrative. It is intended that the scope of the present invention is not shown by the description above but is shown by the claims, and includes the claims, the meanings of equivalence and all modifications within the range.

## Claims

1. A method for producing chlorine comprising:
an oxidation step of oxidizing hydrogen chloride in a raw material gas containing the hydrogen chloride and impurities with a gas containing oxygen, thereby obtaining a gas containing chlorine, water, unreacted hydrogen chloride, and unreacted oxygen;
an absorption step of bringing the gas containing chlorine, water, unreacted hydrogen chloride, and unreacted oxygen obtained in said oxidation step into contact with an absorbent liquid including water or aqueous hydrochloric acid or cooling the gas, thereby recovering unreacted hydrogen chloride in the form of a solution containing hydrogen chloride and water as main components and simultaneously obtaining a gas containing chlorine and unreacted oxygen as main components; and
a stripping step of distilling the solution obtained in said absorption step, thereby obtaining a gas containing hydrogen chloride as a main component, wherein
the gas obtained in said stripping step, which contains hydrogen chloride as a main component and contains 5 to 50% by volume of water, is recovered and mixed with said raw material gas.

2. The method for producing chlorine according to claim 1, wherein said stripping step is carried out by using a stripping tower, the method further comprises a dehydration step of dehydrating partially or wholly the hydrogen chloride solution at the bottom portion of the stripping tower after the stripping, and
when the pressure in said stripping step is represented by P_{dif} and the pressure in said dehydration step is represented by P_{de}, there is a condition satisfying P_{dif} > P_{de.}

3. The method for producing chlorine according to claim 2, wherein said dehydration step is a step of using a distillation tower and carrying out dehydration by recovering water from the top portion of the distillation tower,
said hydrogen chloride solution to be subjected to said dehydration step has a composition being more rich in water than an azeotropic composition of hydrogen chloride and water under said pressure P_{de}, and
the method further comprises a supplying step of supplying, as an absorbent liquid of said absorption step, partially or wholly the hydrogen chloride solution at the bottom portion of said distillation tower after the dehydration.

4. The method for producing chlorine according to claim 1, the method comprising a heat recovering mechanism by heat exchange between the solution obtained in said absorption step and being subjected to said stripping step and the hydrogen chloride solution at the bottom portion of said distillation tower in said dehydration step.

5. The method for producing chlorine according to claim 1, wherein said oxidation step is performed by using a catalyst including metal ruthenium or a ruthenium compound.

6. The method for producing chlorine according to claim 5, wherein said metal ruthenium or ruthenium compound is supported on a metal oxide carrier.
